# EUROPÄISCHE PATENTANMELDUNG

(11) **EP 2 606 721 A1**
(43) Veröffentlichungstag der Anmeldung: **26.06.2013**
(21) Anmeldenummer: 12196871.3
(22) Anmeldetag: 13.12.2012
(51) Int. Cl.: A01K 97/10

(54) **Angelrutenhalter**

(30) Priorität: 22.12.2011 DE 102011056863; 02.10.2012 DE 102012109385
(71) Anmelder: Wallner, Jürgen, 01099 Dresden (DE)
(72) Erfinder: Wallner, Jürgen, 01099 Dresden (DE)
(74) Vertreter: Kaufmann, Sigfrid

(57) **Zusammenfassung**

Die Erfindung betrifft einen Angelrutenhalter mit einem geraden Stangenelement 5, das einen Verankerungsabschnitt 9 zum Einbringen in den Erdboden und einen Halteabschnitt 11 zum Halten einer Angelrute daran aufweist, und einem Haltering 13 zum Hindurchführen der Angelrute durch denselben, wobei der Haltering an dem Halteabschnitt angeordnet ist und die Angelrute mittels des Halterings an dem Halteabschnitt gehalten ist. Bevorzugt ist das Stangenelement mehrteilig, wobei dessen Teile zueinander höhenverstellbar und zueinander verdrehbar sind, wobei das Teil, das mindestens einen Haltering oder mehrere Halteringe trägt, durch eine Einstellvorrichtung in seiner Ausrichtung (und damit die Angel) zum beangelten Gewässer verstellt werden kann. Zudem ist es möglich, an dem Einsteckelement 5.3 oder 5.4 einen Adapter 25 mit einem Bissanzeiger zu befestigen, der synchron die Bewegungen des Einsteckelementes/der Angel mitmacht.

## Beschreibung

Die Erfindung betrifft einen Angelrutenhalter zum Halten einer Angel bzw. Angelrute während des Angelns.

Beim Grundangeln ohne Pose sollte die von der Angelrute ins Angelgewässer verlaufende Angelsehne straff gespannt sein, um die durch den Biss eines Fisches hervorgerufenen Vibrationen von der Sehne abnehmen zu können oder auf die Angelrute übertragen zu können und somit eine zuverlässige Bisserkennung zu ermöglichen. Um bei der Vibrationsabnahme von der Angelrute eine hinreichend starke Vibration feststellen zu können, sollte beim Angeln die von der Angelrute weg verlaufende Angelsehne einen Winkel von (im Wesentlichen) 90° mit der Angelrute bilden, d.h. in einem Winkel von (im Wesentlichen) 90° von der Angelrute abgehen, um ein zuverlässiges Übertragen der durch einen Biss verursachten Vibrationen auf die Angelrute mittels Reibung zwischen der Angelsehne und der an der Angelrute vorgesehenen Angelsehnenführung zu gewährleisten. Die Ausrichtung der Angelrute sollte unter Berücksichtigung der jeweils vorliegenden Angelbedingungen (Gewässerart, Fischart, Witterung) entsprechend den aufgezeigten Erfordernissen erfolgen.

Es ist bekannt, während des Angelns mit einer Angel einen Angelrutenhalter bzw. Angelhalter zum Halten der Angel zu verwenden, sodass der Angler die Angelrute nicht ständig mit den Händen halten muss. Zum Beispiel kann die Angel mittels Auflegens auf zwei in den Erdboden gesteckte Gabeln (z.B. Metallgabeln) gehalten werden. Als ein anderes Beispiel beschreibt die DE 102 39 620 A1 einen Angelhalter mit einem in den Erdboden steckbaren Stabsegment und einem Angelrutenträger, wobei der Anstellwinkel des Angelrutenträgers und der an demselben befestigten Angelrute mittels einer Neigungsverstellvorrichtung variabel einstellbar ist. Die DE 102 23 628 A1 beschreibt einen Halter für eine Angelrute mit einem die Angelrute aufnehmenden Träger, der über ein Gelenk mit einer Verankerung verbunden und an der Verankerung in verschiedenen Neigungsstellungen arretierbar ist.

Bei den beschriebenen Angelhalterungen wird die Angelrute (z.B. bei dem eingestellten Neigungswinkel) im Wesentlichen positionsfixiert gehalten, wobei z.B. die Längsausrichtung der Angelrute durch zwei voneinander beabstandete Arretier- bzw. Führungselemente des Angelrutenhalters (z.B. zwei Gabeln oder zwei Klemmhalterungen) vorgegeben ist, und wobei zusätzlich eine Rotation der Rute um ihre Längsachse durch eine entsprechende Fixierung verhindert sein kann. Bei einem Biss eines Fisches und Ausübung von Zug durch den Fisch auf die Angelsehne kann die Angelrute sich aufgrund der Positionsfixierung durch den Angelrutenhalter nicht entsprechend der Richtung der Zugkraft ausrichten und es besteht die Gefahr, dass die Angelrute aus der Halterung gerissen wird oder in der Halterung verbleibt und (bei entsprechend großer Zugkraft) beschädigt wird und z.B. bricht.

Durch die Erfindung wird ein robuster, unkompliziert aufgebauter und variabel verwendbarer Angelrutenhalter geschaffen, mittels dessen eine zuverlässige Halterung einer Angelrute ermöglicht ist und die Gefahr der Beschädigung der Angelrute vermindert ist.

Durch die Erfindung wird ein Angelrutenhalter zum Halten bzw. Aufnehmen einer Angelrute bereitgestellt, der ein gerades Stangenelement und einen Haltering aufweist. Das (längliche) Stangenelement weist einen Verankerungsabschnitt, der in den Untergrund bzw. Erdboden eingebracht werden kann und zum Verankern des Angelrutenhalters im Erdboden vorgesehen ist, und einen Halteabschnitt, der zum Halten einer Angelrute daran vorgesehen ist, auf. Der Haltering ist - in einer in einem beliebigen Neigungswinkel bezüglich der Längsrichtung des Stangenelements ausgerichteten Ebene verlaufend - an dem Halteabschnitt angeordnet. Die Rute wird durch den Haltering hindurchgeführt und mittels des Halterings an dem Halteabschnitt gehalten. Gemäß einer bevorzugten Ausführungsform ist der Haltering in einer (im Wesentlichen) senkrecht bezüglich der Längsrichtung des Stangenelements ausgerichteten Ebene verlaufend an dem Halteabschnitt angeordnet.

Bei der bestimmungsgemäßen Verwendung wird das Stangenelement mit seinem Verankerungsabschnitt (im Wesentlichen) lotrecht in den Erdboden eingebracht bzw. eingesteckt, wobei der Haltering z.B. (im Wesentlichen) in einer horizontal bzw. parallel zum Erdboden ausgerichteten Ebene verläuft. Die Angelrute wird mittels des Halterings an dem Halteabschnitt gehalten, indem die Angelrute durch den Haltering hindurchgeführt wird, wobei der Schwerpunkt der Angelrute oberhalb des Halterings liegt, und nun mit ihrer Spitze in Richtung der Horizontalen geneigt wird, wobei die Angelrute mittels der Hebelwirkung an dem Haltering verklemmt und somit gehalten wird.

Indem die Angelrute mittels Verklemmens an dem Haltering gehalten ist, ist eine zuverlässige Halterung der Rute ermöglicht. Zudem kann die Rute bei positionsfixiertem Angelrutenhalter (d.h. ohne die Ausrichtung des Rutenhalters zu verändern) mit ihrer Längsrichtung in eine beliebige (horizontale) Richtung weisend an dem (rundlichen) Haltering angeordnet werden, wobei die Ausrichtung der Rute einen Winkelbereich von (fast) 360° abdecken kann, sodass eine variable Verwendbarkeit des Rutenhalters gegeben ist. Indem die Rute lediglich mittels der durch ihr Eigengewicht hervorgerufenen Hebelwirkung an bzw. in dem Haltering verklemmt und gehalten ist, kann sich zudem bei Ausübung einer Zugkraft auf die Angelsehne die Angelrute mit ihrer Längsrichtung entsprechend der Richtung der Zugkraft ausrichten, ohne aus der Halterung gerissen oder beschädigt zu werden. Aufgrund seines einfachen Aufbaus kann der Rutenhalter zudem äußerst robust ausgeführt werden.

Der Haltering ist in einer in einem beliebigen Neigungswinkel bezüglich der Längsrichtung des Stangenelements ausgerichteten Ebene verlaufend angeordnet, d.h. die entsprechende Ebene und die Längsrichtung schließen einen beliebigen Winkel ein und die von dem Haltering umschlossene Fläche liegt in dieser Ebene. Der Haltering kann z.B. an dem dem Verankerungsabschnitt abgewandten (freien) Längsende des Halteabschnitts an dem Halteabschnitt angeordnet sein (z.B. entlang der Längsrichtung des Stangenelements bündig mit dem Längsende des Halteabschnitts abschließend); sodass z.B. die Bewegungsfreiheit der Angelrute nicht durch einen über den Haltering hinausragenden Abschnitt des Stangenelements eingeschränkt wird.

Der Haltering kann z.B. mit einem Abschnitt seines Umfangsrandes an dem Halteabschnitt angeordnet sein und kann z.B. an dem Halteabschnitt fixiert sein, z.B. mittels einer stoffschlüssigen (etwa mittels Schweißens oder Klebens) oder kraftschlüssigen (etwa mittels Verschraubens) Verbindung. Es kann auch vorgesehen sein, den Haltering mittels eines Abstandhalters in einem Abstand zu dem Stangenelement an demselben anzuordnen. Der Haltering hat eine rundliche, geschlossene Form und kann z.B. in Form eines Kreises, einer Ellipse oder eines beliebigen Ovals ausgebildet sein. Aufgrund der damit verbundenen Richtungssymmetrie ist der Haltering bevorzugt als Kreisring ausgeführt.

Um ein zuverlässiges Verklemmen der Angelrute an dem Haltering bei einer im Wesentlichen horizontalen Ausrichtung der Rute zu ermöglichen, ist der (freie) Durchmesser bzw. Innendurchmesser des Halterings (bzw. die kleinste durch das Ringzentrum verlaufende Querabmessung des Halterings) größer ausgeführt als der (größte) Durchmesser der zu haltenden Angelrute. Zum Beispiel kann vorgesehen sein, dass der Durchmesser des Halterings größer ist als das doppelte, vierfache oder achtfache des (größten) Durchmessers der zu haltenden Angelrute (an deren Basis- bzw. Griffabschnitt). Da Angelruten in der Regel mit einer sich verjüngenden Form ausgebildet sind, weisen sie an ihrem Basis- bzw. Griffabschnitt auch den größten Durchmesser auf. Es kann z.B. vorgesehen sein, dass der Durchmesser des Halterings größer ist als 5 cm, 10 cm oder 20 cm.

Gemäß einer Ausführungsform ist der Haltering um die Längsrichtung des Stangenelements (als Drehachse) herum rotier- oder schwenkbar und/oder entlang der Längsrichtung des Stangenelements beweg- bzw. verschiebbar an dem Halteabschnitt angeordnet. Es kann auch vorgesehen sein, den Haltering derart an dem Halteabschnitt anzuordnen, dass der Neigungswinkel des Halterings bezüglich der Längsrichtung des Stabelements variabel einstellbar ist, wobei der Haltering z.B. ein- oder auch zweiachsig neigungsverstellbar sein kann (wobei z.B. eine Neigungsachse entlang der Tangente an den Haltering am Ort der Kontaktstelle zwischen dem Haltering und dem Stangenelement verlaufen kann und eine andere Neigungsachse entlang der Verbindungslinie zwischen der Kontaktstelle und dem Zentrum des Halterings verlaufen kann). Der Angelrutenhalter kann ferner eine an dem Stangenelement und/oder dem Haltering ausgebildete Arretiervorrichtung zum Arretieren des Halterings in einer eingestellten Position aufweisen. Gemäß dieser Ausführung kann die Positionierung des Halterings an dem Halteabschnitt (z.B. bei im Boden verankertem Stangenelement) variabel sein, wobei die Drehwinkelposition und/oder die Längsposition und/oder der Neigungswinkel des Halterings einstellbar sein können. Der Rutenhalter kann z.B. eine an dem Stangenelement und/oder dem Haltering ausgebildete Führungseinrichtung aufweisen, mittels derer der Haltering an dem Stangenelement bewegbar ist. Zum Beispiel kann das Stangenelement als Rundelement ausgebildet sein und als Führungsschiene zum Verschieben des Halterings daran und als Drehachse zum Rotieren des Halterings darum fungieren, wobei der Haltering z.B. mittels einer daran vorgesehenen Klemmvorrichtung in einer eingestellten Position an dem Rundstab arretierbar sein kann.

Gemäß einer weiteren Ausführungsform weist der Angelrutenhalter einen zweiten Haltering auf, der- in einer in einem beliebigen Neigungswinkel bezüglich der Längsrichtung des Stangenelements ausgerichteten Ebene verlaufend - an dem Halteabschnitt angeordnet ist. Der zweite Haltering kann analog dem oben beschriebenen (ersten) Haltering ausgebildet und an dem Stangenelement bzw. dem Halteabschnitt desselben angeordnet sein; wobei der zweite Haltering denselben Durchmesser wie der erste Haltering oder auch einen anderen Durchmesser als der erste Haltering aufweisen kann. Insbesondere ist der (freie) Durchmesser bzw. Innendurchmesser des zweiten Halterings - wie oben mit Bezug auf den ersten Haltering beschrieben - größer ausgeführt als der (größte) Durchmesser der zu haltenden Angelrute. Gemäß dieser Ausführungsform können mittels des Angelrutenhalters zeitgleich zwei Angelruten in einer im Wesentlichen horizontalen Ausrichtung gehalten werden, z.B. zwei Friedfischruten. Gemäß einer bevorzugten Ausführungsform ist der zweite Haltering in einer (im Wesentlichen) senkrecht bezüglich der Längsrichtung des Stangenelements ausgerichteten Ebene verlaufend an dem Halteabschnitt angeordnet.

Gemäß einer weiteren Ausführungsform sind der erste und der zweite Haltering in der gleichen Drehwinkelposition (bezüglich der Längsrichtung des Stangenelements als Drehachse) und zueinander entlang der Längsrichtung des Stangenelements versetzt an dem Stangenelement angeordnet (oder anordenbar), wobei der erste und der zweite Haltering zudem jeweils in einer senkrecht zur Längsrichtung des Stangenelements ausgerichteten Ebene verlaufend angeordnet (oder anordenbar) sind, und wobei der Angelrutenhalter ferner ein Anschlagelement aufweist, das zwischen dem Verankerungsabschnitt des Stangenelements einerseits und den beiden Halteringen andererseits an dem Halteabschnitt angeordnet ist. Zum Beispiel können der erste und der zweite Haltering zueinander koaxial angeordnet (oder anordenbar) sein.

Gemäß dieser Ausführungsform kann vorgesehen sein, mittels des Angelrutenhalters eine (einzige) Angelrute zu halten, indem die Rute von oben her durch die beiden Halteringe geführt wird und mit ihrem Griffende auf das Anschlagelement aufgesetzt wird, wobei die Rute z.B. mit ihrer Längsrichtung (im Wesentlichen) vertikal bzw. lotrecht verlaufend angeordnet ist (z.B. beim Brandungsangeln).

Das Stangenelement kann z.B. als Rundelement (d.h. als längliches Bauteil mit einem kreisförmigen Querschnitt, z.B. als Rundstabelement oder Rohrelement) oder als Winkelprofilelement (d.h. als längliches Bauteil mit einem winkligen Querschnitt) ausgeführt sein.

Gemäß einer Ausführungsform ist das Stangenelement ein mehrteiliges Stangenelement mit mehreren Stangensegmenten. Zum Beispiel kann vorgesehen sein, das Stangenelement als auf- bzw. einklappbares Stangenelement, als Stangenelement aus mehreren ineinander steckbaren Stangensegmenten oder als Stangenelement aus mehreren teleskopartig ineinander verschiebbaren Stangensegmenten auszubilden. Gemäß dieser Ausführungsform kann der Angelrutenhalter bei Nichtbenutzung (etwa zum Transport), z.B. durch Einklappen bzw. Ineinanderverschieben der Stangensegmente, verkleinert werden.

Gemäß einer weiteren Ausführungsform weist der Angelrutenhalter ferner ein Fußtrittelement zum Einführen des Verankerungsabschnitts in den Untergrund bzw. Erdboden auf, wobei das Fußtrittelement zwischen dem Halteabschnitt und dem Verankerungsabschnitt des Stangenelements an demselben angeordnet ist (bzw. das Stangenelement mittels des Fußtrittelements in den - oberhalb des Fußtrittelements angeordneten - Halteabschnitt und den - unterhalb des Fußtrittelements angeordneten - Verankerungsabschnitt unterteilt wird). Das Fußtrittelement kann z.B. als Fußtrittleiste oder als Fußtrittscheibe ausgeführt sein. Gemäß dieser Ausführung ist ein erleichtertes Einbringen des Stangenelements in den Erdboden ermöglicht, indem der Angler mit den Füßen von oben auf das Fußtrittelement tritt und das Stangenelement mittels seines Körpergewichts in den Erdboden drückt. Das Fußtrittelement kann z.B. einklappbar an dem Stangenelement angeordnet sein.

Es hat sich in der Praxis gezeigt, dass es im Hinblick auf verschiedene Angeltechniken wünschenswert ist, die Angelrute im Angelrutenhalter so zu lagern, dass diese in der Höhe und in ihrer Ausrichtung zum Gewässer verstell- und fixierbar ist, wobei zusätzlich auch adäquat die Verwendung eines schwenk- und höhenverstellbaren Bissanzeigers möglich sein soll.

Der Angelrutenhalter wird deshalb in einer bevorzugten Ausgestaltung mit einem mehrteiligen Stangenelement, dessen Teile zueinander höhenverstellbar und zueinander drehbar sind, wobei das Teil, das den mindestens einen Haltering oder mehrere Halteringe trägt, durch eine Einstellvorrichtung in seiner Ausrichtung zum beangelten Gewässer verstellt werden kann, ausgführt.

Die Erfindung wird nachfolgend anhand von Ausführungsbeispielen mit Bezug auf die beiliegenden Zeichnungen erläutert, wobei gleiche oder ähnliche Merkmale mit gleichen Bezugszeichen versehen sind; hierbei zeigen schematisch:
- Figur 1A: eine Perspektivansicht eines Angelrutenhalters gemäß einer Ausführungsform zusammen mit einer Angelrute;
- Figur 1B: eine Draufsicht des Angelrutenhalters gemäß Figur 1A;
- Figur 2: eine Perspektivansicht eines Angelrutenhalters gemäß einer weiteren Ausführungsform zusammen mit einer Angelrute;
- Figur 3A: in Vorderansicht ein zweiteiliges Stangenelement;
- Figur 3B: in Seitenansicht ein zweiteiliges Stangenelement;
- Figur 4A: in Einzelheit die Verbindung Feststellring und Eintstellvorrichtung gem. Figur 3A/3B;
- Figur 4B: in Einzelheit den Einstellring;
- Figur 5A: in Vorderansicht ein Stangenelement mit einem mehrgliedrigen Verankerungsabschnitt;
- Figur 5B: in Seitenansicht ein Stangenelement mit einem mehrgliedrigen Verankerungsabschnitt;
- Figur 6: (mit Bezug auf Figur 5A/5B) einen Adapter mit einem Bissanzeiger, angeschlossen am Angelrutenhalter.

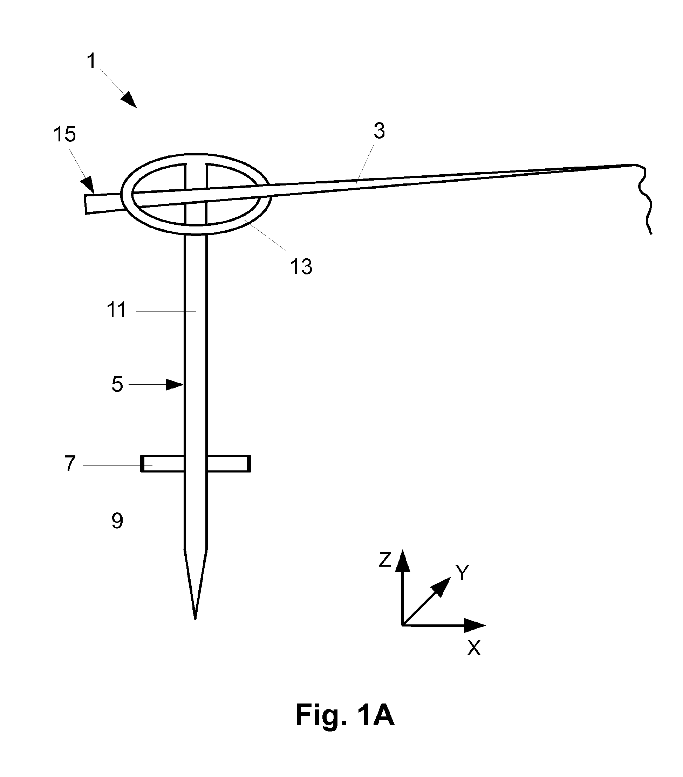

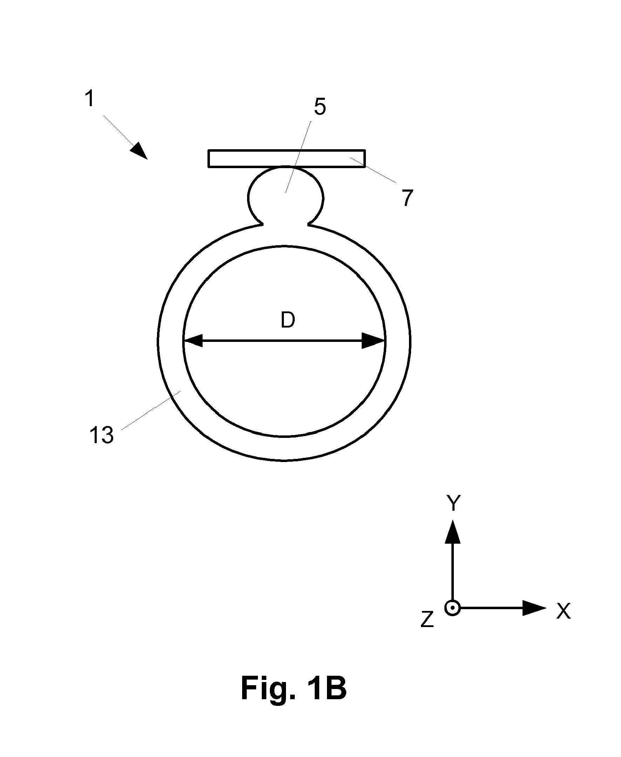

Figur 1A veranschaulicht einen Angelrutenhalter 1 gemäß einer Ausführungsform zusammen mit einer mittels desselben bzw. von demselben gehaltenen Angelrute 3; wobei Figur 1A nicht maßstabsgerecht ist, sondern die Rute 3 der besseren Übersichtlichkeit halber verkleinert darstellt. Figur 1B veranschaulicht den Angelrutenhalter 1 gemäß Figur 1A ohne Angelrute in einer Draufsicht. Der Angelrutenhalter 1 weist ein gerades, als Rundstabelement ausgeführtes Stangenelement 5 auf, welches mittels eines Fußtrittelements in Form einer Fußtrittleiste 7 des Rutenhalters 1 in einen Verankerungsabschnitt 9 und einen Halteabschnitt 11 unterteilt ist. Bei der bestimmungsgemäßen Verwendung des Rutenhalters 1 zur fangbereiten Halterung der Angelrute 3 wird der Verankerungsabschnitt 9 mittels Druckausübung (von oben) auf die Fußtrittleiste 7 im Wesentlichen lotrecht in den Erdboden (nicht dargestellt) eingebracht.

Der Angelrutenhalter 1 weist einen Haltering 13 auf, der in einer senkrecht zur Längsrichtung des Stangenelements 5 ausgerichteten Ebene verlaufend an dem Stangenelement 5 angeordnet ist, wobei gemäß Figur 1A die Längsrichtung des Stangenelements 5 durch die z-Richtung des in den Figuren dargestellten xyz-Koordinatensystems gegeben ist und der Haltering 13 dementsprechend in einer parallel zur xy-Ebene verlaufenden Ebene liegt. Die z-Richtung des xyz-Koordinatensystems ist zugleich die Vertikal- bzw. Lotrichtung.

Die Angelrute 3 ist nahezu horizontal verlaufend an dem Haltering 13 und somit auch an dem Halteabschnitt 11 gehalten, indem die Angelrute 3 mit ihrem Griffende 15 von oben her durch den Haltering 13 hindurchgeführt und dann derart in Richtung der Horizontalen geneigt ist, dass die Angelrute 3 aufgrund der durch ihr Eigengewicht hervorgerufenen Hebelwirkung an dem Haltering 13 verklemmt und somit gehalten ist. Der Haltering 13 ist als kreisförmiger Haltering ausgeführt, dessen freier Durchmesser D größer ist (hier: größer als 5 cm) als der größte Durchmesser der Angelrute 3 (welcher hier durch den Durchmesser am äußersten Griffende 15 gegeben ist).

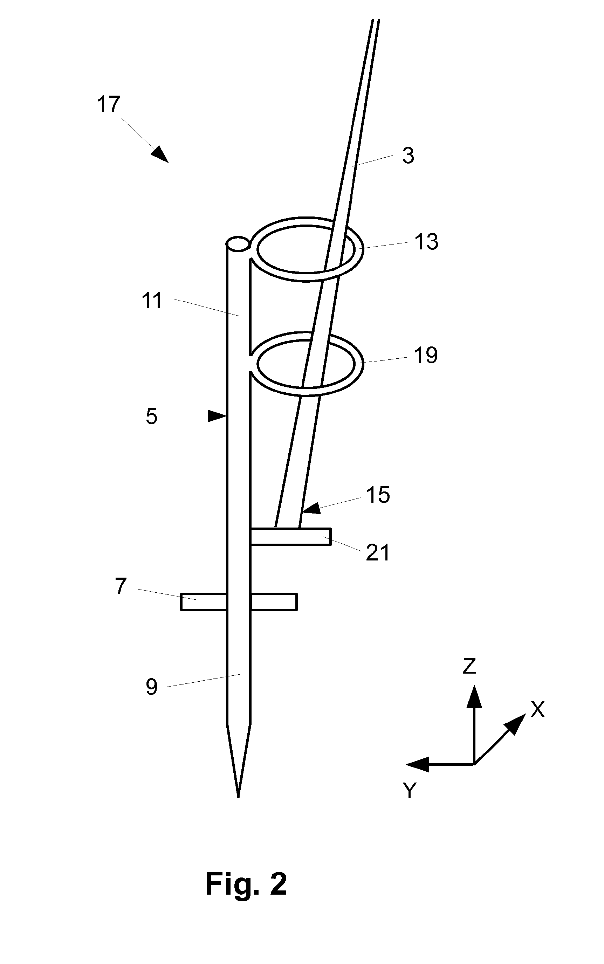

Figur 2 veranschaulicht einen Angelrutenhalter 17 gemäß einer anderen Ausführungsform zusammen mit einer mittels desselben bzw. von demselben gehaltenen Angelrute 3. Analog zu dem mit Bezug auf die Figuren 1A und 1B beschriebenen Angelrutenhalter 1 weist der Angelrutenhalter 17 gemäß Figur 2 ein Stangenelement 5 auf, welches mittels einer an demselben befestigten Fußtrittleiste 7 in einen Verankerungsabschnitt 9 und einen Halteabschnitt 11 unterteilt ist. Der Angelrutenhalter 17 weist einen ersten Haltering 13 und einen zweiten Haltering 19 auf, wobei beide Halteringe 13, 19 in der gleichen Drehwinkelposition (bezüglich des Rundstabelements 5 als Drehachse) und zueinander entlang der Längsrichtung des Stangenelements 5 versetzt an dem Stangenelement 5 angeordnet sind, und wobei jeder der Halteringe 13, 19 in einer senkrecht zur Längsrichtung z des Stangenelements 5 ausgerichteten Ebene verläuft. Gemäß Figur 2 sind die Halteringe 13, 19 als Beispiel kreisförmig mit gleichen Durchmessern ausgeführt und zueinander koaxial angeordnet.

Der Angelrutenhalter 17 weist ferner ein Anschlagelement 21 auf, das zwischen dem Verankerungsabschnitt 9 bzw. dem Fußtrittelement 7 einerseits und den beiden Halteringen 19, 13 andererseits an dem Halteabschnitt 5 angeordnet ist. Da gemäß Figur 2 der (untere) zweite Haltering 19 näher an dem Verankerungsabschnitt 9 angeordnet ist als der (obere) erste Haltering 13, ist das Anschlagelement 21 hier insbesondere zwischen dem (unteren) zweiten Haltering 19 und dem Verankerungsabschnitt 9 (bzw. dem Fußtrittelement 7) angeordnet.

Die Angelrute 3 gemäß Figur 2 ist nahezu vertikal bzw. lotrecht an der Angelrutenhalterung 17 gehalten, indem die Angelrute 3 mit ihrem Griffende 15 von oben her durch die beiden Halteringe 13, 19 hindurchgeführt und auf dem Anschlagelement 21 aufgesetzt ist. Alternativ kann auch vorgesehen sein, mittels der Angelhalterung 17 zwei Angelruten zugleich zu halten, wobei in jedem der Halteringe 13, 19 eine Angelrute mittels Verklemmens in nahezu horizontaler Ausrichtung entsprechend der in Figur 1A veranschaulichten Art und Weise gehalten werden kann (nicht dargestellt).

Wie aus den Figuren 1A und 2 ersichtlich, kann der Verankerungsabschnitt 9 spitz zulaufend (d.h. mit einer sich zum zugehörigen Ende des Stangenelements hin verjüngenden Form) ausgebildet sein, um das Einbringen in den Erdboden zu erleichtern.

Gemäß den in den Figuren 1A und 2 dargestellten Ausführungsformen sind die Halteringe 13, 19 starr (und nicht bewegbar) an dem Stangenelement 5 fixiert. Es kann jedoch auch vorgesehen sein, den Haltering 13 und/oder den Haltering 19 um die Längsrichtung des Stangenelements 5 herum rotier- oder schwenkbar und/oder entlang der Längsrichtung des Stangenelements 5 beweg- bzw. verschiebbar an dem Halteabschnitt 11 anzuordnen (nicht dargestellt). Zudem kann vorgesehen sein, einen jeweiligen der Halteringe 13, 19 derart an dem Halteabschnitt 11 anzuordnen, dass der Neigungswinkel des Halterings bezüglich der Längsrichtung des Stangenelements 5 variabel einstellbar ist, wobei eine erste Neigungsachse z.B. entlang der Tangente an den Haltering am Ort der Kontaktierung zwischen dem jeweiligen Haltering 13, 19 und dem Stangenelement 5 verlaufen kann (d.h. gemäß den Figuren 1A und 2 parallel zur x-Richtung), und wobei eine zweite Neigungsachse z.B. entlang der Verbindungsgeraden zwischen besagter Kontaktstelle und dem Mittelpunkt des jeweiligen Halterings 13, 19 verlaufen kann (d.h. gemäß den Figuren 1A und 2 parallel zur y-Richtung).

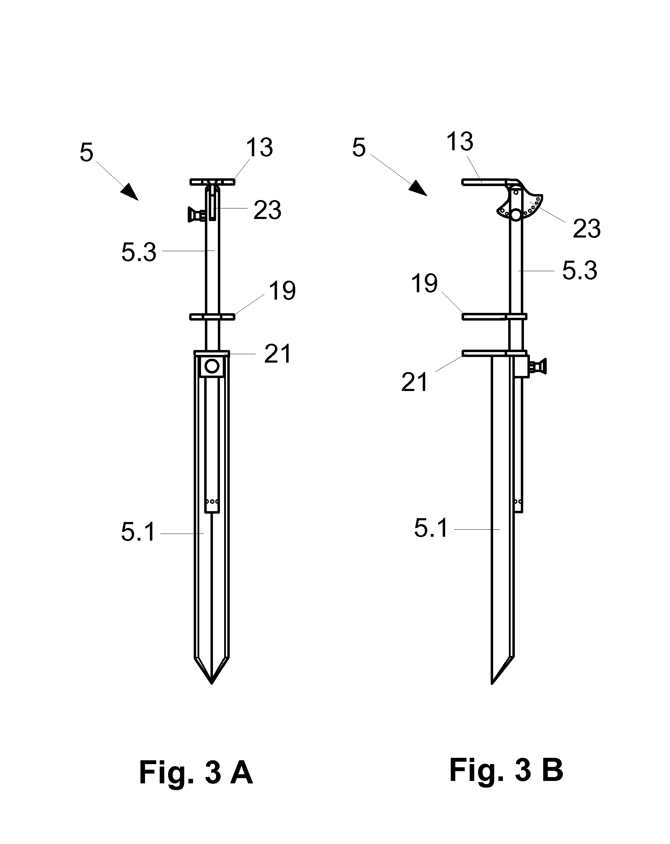

Aus Figur 3 A/3 B ist in Vorder- und Seitenansicht ersichtlich, dass das Stangenelement nunmehr (bevorzugt) zweiteilig ausgeführt ist, wobei das erste Teil, das Rundstabelement 5.1, den Verankerungsabschnitt 9 betrifft, der bei bestimmungsgemäßer Verwendung des Angelrutenhalters in den Erdboden gedrückt wird und somit den Angelrutenhalter fixiert, und das zweite Teil, das Einsteckelement 5.3, dem Halteabschnitt 11 des Stangenelementes 5 gemäß Figur 1A und 2 entspricht.

An dem Einsteckelement 5.3 sind der Haltering 19 und das Anschlagelement 21 für die Angelrute fest angebracht; der Haltering 13 bildet mit der Einstellvorrichtung 23 eine Einheit, die mit dem Einsteckelement 5.3 verschraubt ist. Mittels der Einstellvorrichtung 23 kann der Haltering 13 (und damit die - nicht dargestellte - Angel) in der Neigung zum beangelten Gewässer stetig (stufenlos) oder (wie ausgeführt) gestuft verstellt werden.

Das Einsteckelement 5.3 wird durch das Rundstabelement 5.1 passgenau aufgenommen und geführt; es ist in diesem stufenlos höhenverstellbar und in seiner Senkrechten drehbar, hier in 45°-Schritten. Die Querschnitte der Elemente 5.1 und 5.3 sind hierfür kreisrund.

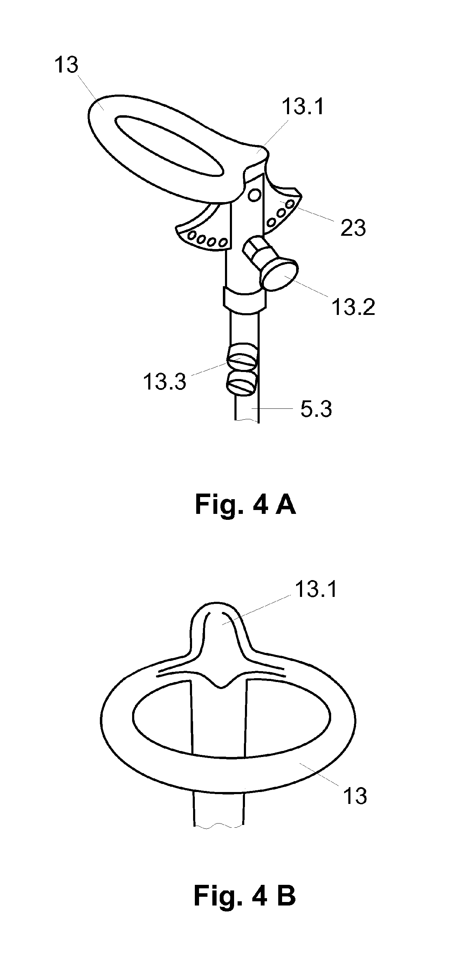

Figur 4A zeigt in Einzelheit die Verbindung Feststellring 13 und Einstellvorrichtung 23.

Der Feststellring 13 weist, damit die in ihm zu lagernden hochwertigen Angeln zum einen exakt fixiert und zum anderen nicht scharfkantig gedrückt werden, eine konkave (nach innen gewölbte) Auflage 13.1 auf (s. auch Figur 4 B). Die Einstellvorrichtung 23 ist mittels einer Lochteilung, in die der Arretierbolzen 13.2 eingreift, in 12°-Schritten verstellbar. Die Einheit Feststellring 13/Einstelleinrichtung 23 ist an das Einsteckelement 5.3 anschraubbar; sie wird mittels Feststellschrauben 13.3 lagefixiert.

In einer weiteren Ausführung der Erfindung ist vorgesehen, den Verankerungsabschnitt 9 des Stangenelementes (bislang hülsenförmiges Rundstabelement) mehrgliedrig, etwa wie eine Gabel mit mehreren Zinken, auszuführen. Praxistests haben ergeben, dass eine zweizinkige Gabel im Hinblick auf das ungehinderte Eindringen in den Landschaftsboden und Transport/Lagerung des Angelrutenhalters besonders geeignet ist und gleichzeitig höchsten Anforderungen an die Standfestigkeit des Angelrutenhalters erfüllt.

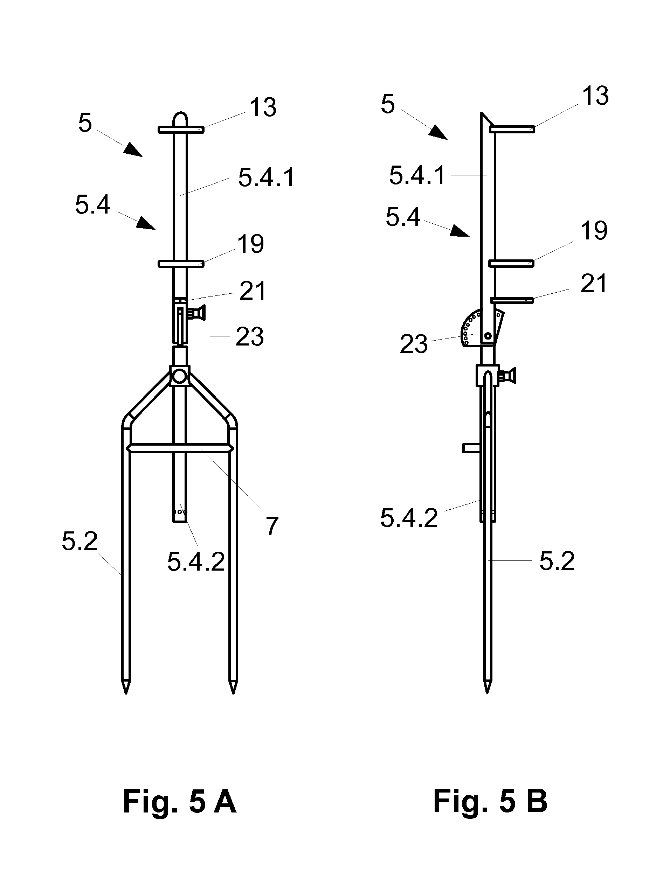

Wie Figuren 5 A/5 B in Vorderansicht zeigen, besteht ein demgemäß gestalteter Angelrutenhalter aus der Gabel 5.2, deren beiden Zinken mittels einer in der Horizontalen kreisförmig gebogenen Fußtrittleiste 7 verbunden sind. Am Zusammenlauf der Zinken befindet sich eine (nicht dargestellte) Führungsbuchse, die in beschriebener Weise ein Einsteckelement, hier also das zweiteilige Einsteckelement 5.4, aufnimmt. Die Teile 5.4.1/5.4.2 des Einsteckelementes sind über die Einstellvorrichtung 23 lösbar miteinander verbunden, wobei durch diese das Teil 5.4.1 mit den Halteringen 13; 19 und dem Anschlagelement 21 geschwenkt werden kann. Das zweiteilige Einsteckelement 5.4 ist ebenso wie das beschriebene einteilige Einsteckelement 5.3 höhenverstell- und drehbar.

Zudem ist vorgesehen, dass das Einsteckelement 5.4 eine Aufnahme für einen Adapter aufweist, mit der ein Bissanzeiger mit dem Angelrutenhalter derart verbunden werden kann, dass dieser die mit der Einstellvorrichtung 21 bewirkten Bewegungen der Halteringe 13;19 bzw. die Bewegung der Angel synchron mitmacht.

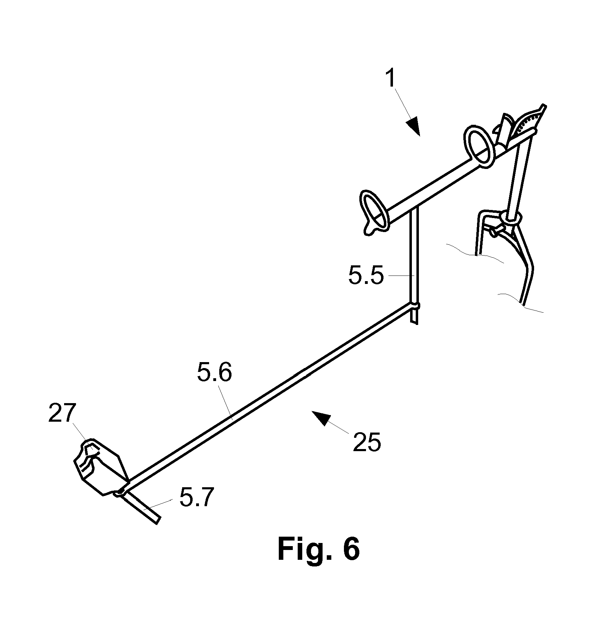

Aus Figur 6 ist (mit Bezug auf Figur 5 A/5 B) zu entnehmen, dass der Adapter 25 an dem Teil 5.4.1 des zweiteiligen Einsteckelementes 5.4 aufgenommen wird; üblicherweise mittels einer (nicht dargestellten) Schraubverbindung. Der Adapter 25 besteht aus dem Anschlusselement 5.5, dem sich zum Teil 5.4.1 im Anbauzustand in gleicher Flucht befindlichen und zu diesen parallel beabstandeten Zwischenstück 5.6 und dem Abstützelement 5.7, das den (bevorzugt elektronischen) Bissanzeiger 27 trägt. Das Abstützelement 5.7 ist in seiner Aufnahme (nicht dargestellt) verstellbar.

Wird der Angelrutenhalter mit dem Adapter 25 eingesetzt, wird bevorzugt die Ausführung des Angelrutenhalters mit der Gabel 5.2 verwendet.

### Liste der verwendeten Bezugszeichen

- 1: Angelrutenhalter
- 3: Angelrute
- 5: Stangenelement
- 5.1: Rundstabelement, hülsenförmig
- 5.2: Gabel mit Führungsbuchse
- 5.3: Einsteckelement (einteilig)
- 5.4: Einsteckelement (zweiteilig)
- 5.4.1: Teil 1
- 5.4.2: Teil 2
- 5.5: Anschlusselement Adapter
- 5.6: Zwischenstück Adapter
- 5.7: Abstützelement Adapter
- 7: Fußtrittelement/Fußtrittleiste
- 9: Verankerungsabschnitt
- 11: Halteabschnitt
- 13: (erster) Haltering
- 13.1: Konkave Auflage für Angelrute
- 13.2: Arretierbolzen
- 13.3.: Feststellschraube
- 15: Griffende der Angelrute
- 17: Angelrutenhalter gemäß einer weiteren Ausführungsform
- 19: (zweiter) Haltering
- 21: Anschlagelement für Angelrute
- 23: Einstellvorrichtung
- 25: Adapter (Träger Bissanzeiger)
- 27: Bissanzeiger
- D: Haltering-Durchmesser

## Patentansprüche

1. Angelrutenhalter (1, 17), aufweisend:
- ein gerades Stangenelement (5) mit einem Verankerungsabschnitt (9) zum Einbringen in den Erdboden und einem Halteabschnitt (11) zum Halten einer Angelrute (3) daran, und
- einen ersten Haltering (13) zum Hindurchführen der Angelrute (3) durch denselben, wobei der Haltering an dem Halteabschnitt (11) angeordnet ist und die Angelrute (3) mittels des Halterings (13) an dem Halteabschnitt (11) gehalten ist.

2. Angelrutenhalter nach Anspruch 1, wobei der Haltering (13) in einer senkrecht zur Längsrichtung des Stangenelements (5) ausgerichteten Ebene verlaufend an dem Halteabschnitt (11) angeordnet ist.

3. Angelrutenhalter nach Anspruch 1 oder 2, wobei der erste Haltering um die Längsrichtung des Stangenelements rotierbar und/oder entlang der Längsrichtung des Stangenelements verschiebbar und/oder bezüglich des Stangenelements neigungsverstellbar ist.

4. Angelrutenhalter (17) nach einem der Ansprüche 1 bis 3, ferner aufweisend einen zweiten Haltering (19), der an dem Halteabschnitt (11) angeordnet ist.

5. Angelrutenhalter gemäß Anspruch 4, wobei der erste (13) und der zweite (19) Haltering in der gleichen Drehwinkelposition bezüglich der Längsrichtung des Stangenelements (5) als Drehachse und zueinander entlang der Längsrichtung des Stangenelements (5) versetzt angeordnet oder anordenbar sind, wobei der erste (13) und der zweite (19) Haltering zudem jeweils in einer senkrecht zur Längsrichtung des Stangenelements (5) ausgerichteten Ebene verlaufend angeordnet oder anordenbar sind, ferner aufweisend ein Anschlagelement (21), das zwischen dem Verankerungsabschnitt (9) und den beiden Halteringen (13, 19) an dem Halteabschnitt (11) angeordnet ist.

6. Angelrutenhalter gemäß Anspruch 5, wobei der erste (13) und der zweite (19) Haltering zueinander koaxial angeordnet oder anordenbar sind.

7. Angelrutenhalter gemäß einem der Ansprüche 1 bis 6, wobei das Stangenelement (5) als Rundelement ausgeführt ist.

8. Angelrutenhalter gemäß einem der Ansprüche 1 bis 6, wobei das Stangenelement als Winkelprofilelement ausgeführt ist.

9. Angelrutenhalter nach einem der Ansprüche 1 bis 8, wobei das Stangenelement ein mehrteiliges Stangenelement ist.

10. Angelrutenhalter nach Anspruch 9, wobei das Stangenelement mehrere teleskopartig ineinander verschiebbare Stangensegmente aufweist.

11. Angelrutenhalter (1, 17) nach einem der Ansprüche 1 bis 10, ferner aufweisend ein Fußtrittelement (7) zum Einführen des Verankerungsabschnitts (9) in den Untergrund, wobei das Fußtrittelement zwischen dem Verankerungsabschnitt (9) und dem Halteabschnitt (11) des Stangenelements (5) an demselben angeordnet ist.

12. Angelrutenhalter nach Anspruch 9, **dadurch gekennzeichnet, dass** die Teile des Stangenelementes (5) zueinander höhenverstellbar und zueinander drehbar sind und das Teil, das den mindestens einen Haltering (13) oder mehrere Halteringe (13; 19) trägt, durch eine Einstellvorrichtung (23) in seiner Ausrichtung zum beangelten Gewässer verstellt werden kann.

13. Angelrutenhalter nach Anspruch 12, **dadurch gekennzeichnet, dass** das Stangenelement (5) zweiteilig ausgeführt ist, wobei ein hülsenförmiges Rundstabelement (5.1) oder eine Gabel mit einer Führungsbuchse (5.2), die jeweils den Verankerungsabschnitt des Stangenelementes (5) verkörpern, ein Einsteckelement (5.3 oder 5.4), das als Halteabschnitt (11) des Stangenelementes (5) die Einstellvorrichtung (23) mit dem Haltering (13) bzw. den Halteringen(13; 19) trägt, führt und in diesem höhenverstellbar und in seiner Senkrechten drehbar ist.

14. Angelrutenhalter nach Anspruch 13, **dadurch gekennzeichnet, dass** das Einsteckelement (5.4) mindestens eine Aufnahme aufweist, über die ein Adapter (25) mit einem Bissanzeiger (27) lösbar an dem Angelrutenhalter angebracht werden kann.

15. Angelrutenhalter nach Anspruch 14, **dadurch gekennzeichnet, dass** der Adapter (25) an dem Teil 1 (5.4.1) eines zweiteiligen Einsteckelementes (5.4), an dem die Halteringe (13; 19) sowie das Anschlagelement (21) befestigt sind, aufgenommen wird, wobei der Adapter (25) aus einem Anschlusselement (5.5), einem sich zum Teil 1 (5.4.1) des Ansteckelementes (5.4) im Anbauzustand in gleicher Flucht befindlichen und zu diesem parallel beabstandetem Zwischenstück (5.6) und einem Abstützelement (5.7), das den Bissanzeiger (17) trägt, besteht.
